# EUROPEAN PATENT APPLICATION

(11) **EP 2 039 456 A2**
(43) Date of publication of application: **25.03.2009**
(21) Application number: 08164644.0
(22) Date of filing: 18.09.2008
(51) Int. Cl.: B23D 59/00

(54) **Dash-dot laser cutting guide tiltable from a housing for battery replacement**

(30) Priority: 21.09.2007 US 859222
(71) Applicant: Black & Decker, Inc., Newark, DE 19711 (US)
(72) Inventor: Gibbons, Louis A., Stevensville, 21666 (US); Cannaliato, Michael, Bel Air, MD 21014 (US); Vantran, John S., Parkton, MD 21120 (US); McKay, Timothy, Ashington, Northumberland NE63 9EJ (GB)
(74) Representative: Bell, Ian Stephen

(57) **Abstract**

A jigsaw (10) generally includes a housing (12) that contains a motor (18) activated by a trigger assembly (20). A reciprocating shaft (24) is connected to the motor (18) that extends from the housing (12) toward a cutting area. A laser module (100) is contained with a housing (120) operable to produce a laser light pattern forward of the cutting area. An upper connection portion (122) releaseably connects the housing (120) of the laser module (100) to the housing (12) of the jigsaw. A lower connection portion (124) pivotally couples the housing (120) of the laser module to the housing (12) of the jigsaw to permit the housing of the laser module to tilt away from the housing of the jigsaw to provide access to a rear area of the laser module.

## Description

The present teachings relate to a laser cutting guide and more particularly relate to a selectable dash-dot laser light pattern produced by a laser module that is tiltable from a housing for easy battery replacement.

Typically, jigsaw laser cutting guides can project a bright and continuous laser line in a cutting direction forward from the jigsaw. In this instance, the bright laser light used to illuminate the jigsaw cutting path can be of such intensity that the laser light can obscure a view of a cutting path through a workpiece. Moreover, continuous use of the bright line pattern of laser light can reduce the lifetime of the batteries necessitating more frequent replacement. In some instances, replacement of the batteries can be a complex and relatively lengthy process.

The present invention provides a jigsaw including a housing that contains a motor activated by a trigger assembly. A reciprocating shaft preferably is connected to the motor and extends from the housing toward a cutting area. A laser module preferably produces a laser light pattern forward of the cutting area. The laser module preferably includes an upper connection portion configured to releasably connect to the housing and preferably also includes a lower connection portion that pivotally couples to the housing to permit the laser module to tilt away from the housing to provide access to a rear area of the laser module.

In particular, a first aspect of the invention provides a jigsaw comprising: a housing that contains a motor activated by a trigger assembly; a reciprocating shaft connected to said motor that extends from said housing toward a cutting area; a laser module contained with a housing operable to produce a laser light pattern forward of said cutting area; an upper connection portion that releaseably connects said housing of said laser module to said housing of the jigsaw; and a lower connection portion that pivotally couples said housing of said laser module to said housing of the jigsaw to permit said housing of said laser module to tilt away from said housing of the jigsaw to provide access to a rear area of said laser module.

A second aspect of the invention provides a laser module that highlights a cutting path of a cutting tool, the laser module comprising: a housing of the laser module configured to connect to the cutting tool; an optical assembly connected to said housing having one or more optical members movable between an engaged condition and a disengaged condition; and a laser generator in the laser module that produces a laser light to establish a laser light pattern that highlights the cutting path, wherein said laser light pattern is adjusted when said one or more optical members are moved between said engaged condition and said disengaged condition and wherein said one or more optical members are accessible from outside of said housing to be moved between said engaged condition and said disengaged condition by hand.

Preferably, the laser module further comprises an upper connection portion that releaseably connects said housing of the laser module to the cutting tool and a lower connection portion that pivotally couples said housing of the laser module to the cutting tool to permit said housing of the laser module to tilt away from the cutting tool to provide access to a rear area of the laser module. When the laser module is tilted away from the cutting tool, it preferably provides access to a rear area of the laser module in which one or more batteries can be replaced. Preferably, the laser light does not travel through said one or more optical members when said one or more optical members are in said disengaged condition. The laser light pattern produced by the laser module preferably is a sequence of dots, or a sequence of dashes, or a combination thereof.

A third aspect of the invention provides a jigsaw for cutting a workpiece, the jigsaw comprising: a housing; a cutting blade having a back side and a cutting side, said cutting blade extends from said housing; and a laser generator connected to said housing that projects a line of laser light that is generally perpendicular to said cutting blade, said line of laser light contacts said back side of the cutting blade and establishes a laser line on the workpiece that is generally perpendicular to a cutting direction through the workpiece and includes an interruption in the laser line on the workpiece that is generally aligned with said cutting direction.

Preferably, the laser generator that projects said line of laser light that contacts said back side of the cutting blade establishes three generally parallel laser lines on the workpiece that are generally perpendicular to said cutting direction through the workpiece and which include an interruption in each of said three generally parallel laser lines on the workpiece that are generally aligned with said cutting direction. The jigsaw preferably further comprises a light source that casts light onto said back side of the cutting blade to produce a shadow disposed in said interruption established in said laser line generally aligned with said cutting direction.

A fourth aspect of the invention provides a jigsaw comprising: a housing that contains a motor activated by a trigger assembly; a reciprocating shaft connected to said motor that extends from said housing toward a cutting area; a shoe member pivotally connected to said housing, said shoe member defining an aperture at least partially around said cutting area; a laser generator attached to a top surface of said shoe member; said laser generator produces a laser light; and an optical member attached to said top surface of said shoe member that receives said laser light and produces a laser light pattern forward of said cutting area.

A fifth aspect of the invention provides a method comprising: grasping an optical member accessible on a housing of a laser module connected to a housing of a cutting tool; moving said optical member between an engaged condition and a disengaged condition to alter a laser light pattern produced from said laser module; unfastening an upper connection portion of said housing of said laser module from said housing of said cutting tool; and tilting said housing of said laser module away from said housing of said cutting tool about a lower connection portion between said housing of said laser module and said housing of said cutting tool to provide access to a rear area of said laser module.

It is to be understood that any feature of any aspect of the invention may be a feature of any other aspect of the invention. Further areas of applicability will become apparent from the description provided herein.

The drawings described herein are for illustration purposes.
FIG. 1 is a perspective view of a jigsaw having a housing to which a keel assembly and a laser module are attached in accordance with the present teachings.
FIG. 2 is a partial side view of the jigsaw of FIG. 1 and shows the laser module tilted away from the housing of the jigsaw to provide access for battery replacement in the laser module in accordance with the present teachings.
FIG. 3 is a front view of the jigsaw of FIG. 1 showing the laser module attached to the housing of the jigsaw that can be pivoted relative to a shoe member in accordance with the present teachings.
FIG. 4 is a partial perspective view of the laser module and the jigsaw of FIG. 1 producing a laser light pattern of consecutive dots in accordance with the present teachings.
FIG. 5 is similar to FIG. 4 and shows the laser module providing a laser light pattern of repeating dashes in accordance with the present teachings.
FIG. 6 is a rear view of the laser module showing two posts that each extend outwardly and can pivotally couple to the jigsaw housing in accordance with the present teachings.
FIG. 7 is a partial side view of the laser module of FIG. 6 showing one or more optical members that can swing down to change the pattern of the laser light in accordance with the present teachings.
FIG 8. is a bottom view of the laser module of FIG. 6 showing the one or more optical members in accordance with the present teachings.
FIG. 9 is a simplified partial exploded assembly view of an exemplary optical member having a multiple component construction in accordance with the present teachings.
FIG. 10 is similar to FIG. 9 and shows an exemplary optical member having a generally unitary construction in accordance with the present teachings.

FIG. 11 is a simplified perspective view of a shoe member with a laser module connected thereto that produces a laser light pattern forward of a cutting area in accordance with further aspects of the present teachings.
FIG. 12 is a diagram of a side view of an exemplary jigsaw having a laser module that produces three parallel laser lines that are generally perpendicular to a cutting direction in accordance with yet another aspect of the present teachings.
FIG. 13 is a diagram of a top view of the jigsaw of FIG. 12 showing an interruption of the three parallel laser lines that serve as a cutting guide in accordance with the present teachings.

It should be understood that throughout the drawings, corresponding reference numerals indicate like or corresponding parts and features. Moreover, certain terminology can be used for the purpose of reference only and do not limit the present teachings. For example, terms such as "upper," "lower," "above" and "below" can refer to directions in the drawings to which reference is made. Terms such as "front," "back," "rear" and "side" can describe the orientation of portions of the component, function, system, etc. within a consistent but arbitrary frame of reference which can be made more clear by reference to the text and the associated drawings describing the component, function, system, etc. under discussion. Such terminology may include the words specifically mentioned above, derivatives thereof and words of similar import. Similarly, the terms "first," "second" and other such numerical terms referring to structures, systems and/or methods do not imply a sequence or order unless clearly indicated by the context.

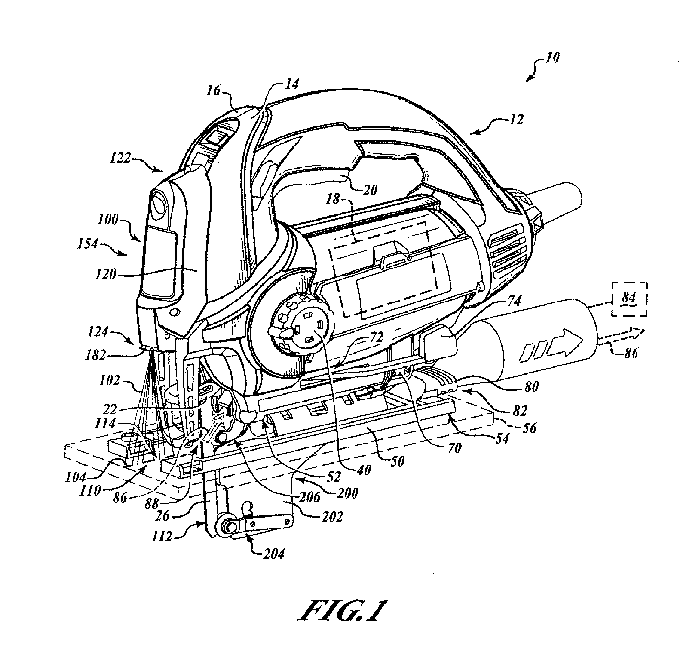

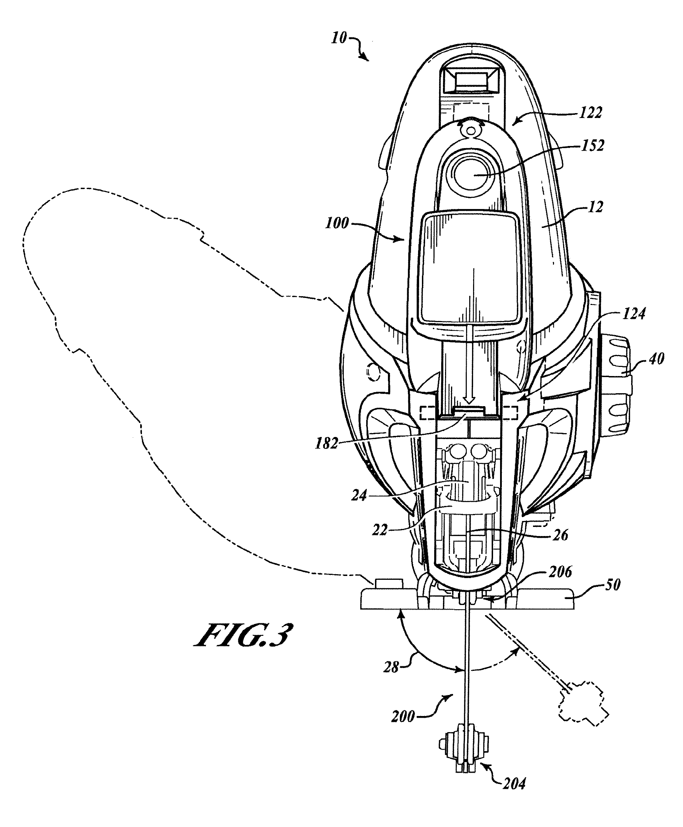

With reference to FIG. 1, a jigsaw 10 generally includes a housing 12 that can be formed of two half shells 14, 16. The housing 12 can contain a motor 18. When activated by a trigger assembly 20, the motor 18 can provide a reciprocating and/or pendulum motion to a cutting blade 26 attached to an end of a reciprocating shaft 24 (FIG. 3) with a cutting blade holder 22, as shown in (FIG. 3). With continuing reference to FIG. 3, the jigsaw 10 can establish the reciprocating and orbital motion of the cutting blade 26 at one or more of the cutting angles 28. A single control member 40 on a side of the housing 12 can control a rate of the reciprocation and/or a magnitude of the orbital (pendulum) motion of the cutting blade 26.

A shoe member 50 can be coupled to a bottom 52 (FIG. 1) of the housing 12 in such a way as to permit the shoe member 50 to pivot relative to the housing 12. As the shoe member 50 pivots relative to the housing 12, the cutting 26 can be orientated at the various cutting angles 28 relative to the shoe member 50. With reference to FIG. 1, a bottom surface 54 of the shoe member 50 can abut a workpiece 56 (FIG. 1). The workpiece 56 can be wood, plastic, metal, other suitable materials and one or more combinations thereof and can be in the form of pipe, sheet material, stock material, other suitable forms and/or materials and one or more combinations thereof. The shoe member 50 can be pivoted relative to the housing 12 to adjust the cutting angle 28 (FIG. 3) through which the jigsaw 10 can cut through the workpiece 56. In one example, a forty-five degree cutting angle 58 (phantom line) is shown in FIG. 3.

With reference to FIG. 1, an angle indicator wheel 70 that can be rotatably coupled to the shoe member 50 can indicate the cutting angle 28 (FIG. 3) of the jigsaw 10, as the shoe member 50 is moved relative to the housing 12. Further, a locking mechanism 72 can include a bevel lever 74 that can be adjusted between an unlocked condition and a locked condition (FIG. 1). In the unlocked condition, the locking mechanism 72 can permit the shoe member 50 to pivot relative to the housing 12. In the locked condition, the locking mechanism 72 can prevent the shoe member 50 from pivoting relative to the housing 12. The cutting angle 28 (FIG. 3) to which the shoe member 50 can be pivoted relative to the housing 12, when the locking mechanism 72 is in the unlocked condition, can be indicated by the angle indicator wheel 70. It will be appreciated in light of the disclosure that the housing 12 of the jigsaw 10 can pivot relative to the shoe member 50 about a pivot axis 76 that extends in a direction that is generally parallel to a cutting direction 78.

A dust extraction port 80 can be formed on a rear portion 82 of the shoe member 50 such that a vacuum source 84 can be connected with various suitable connections to the dust extraction port 80. A dust extraction airflow 86 can be extracted from a cutting area 88. From the cutting area 88, the dust extraction airflow 86 can move through an air-flow pathway established in the shoe member 50 and out the dust extraction port 80.

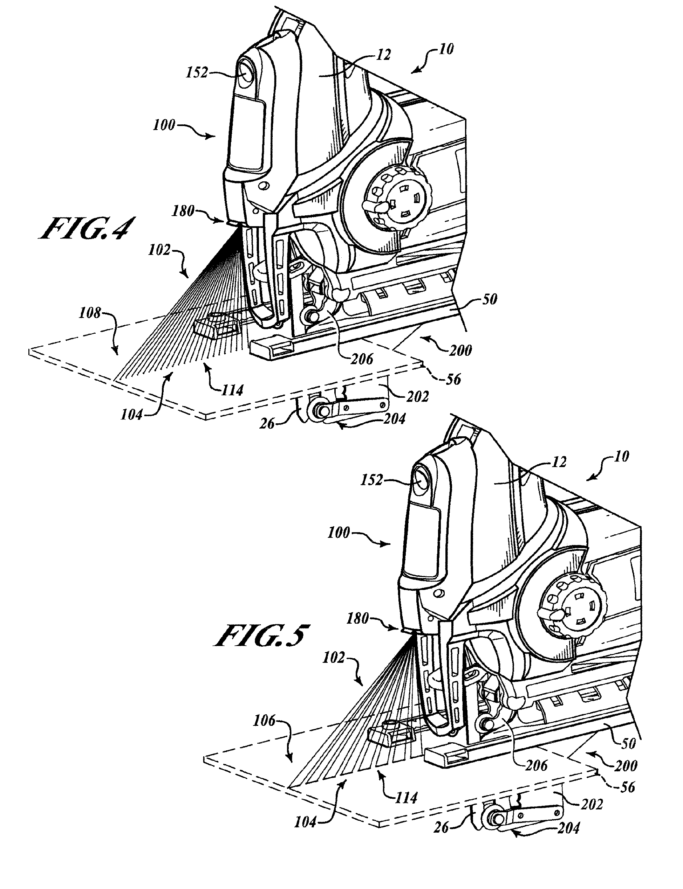

The jigsaw 10 can include a laser module 100 and a keel assembly 200. The laser module 100 can project a laser light 102 that can produce a laser light pattern 104. The laser light pattern 104 can provide, for example, a sequence of dashes 106 (FIG. 5), a sequence of dots 108 (FIG. 4) or one or more combinations of dots and dashes 110 (FIG. 1). The laser light pattern 104 can be produced beyond a front side 112 of the cutting blade 26. In this regard, the laser light pattern 104 can mark a cutting path 114 of the cutting blade 26 through the workpiece 56 in the cutting direction 78.

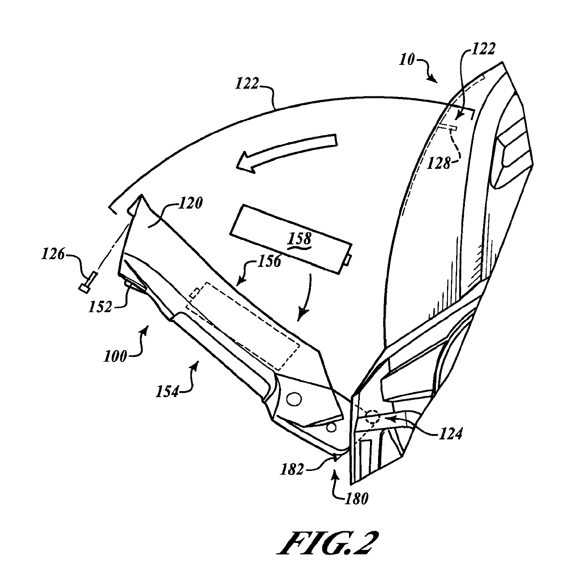

With reference to FIG. 1, the laser module 100 can include a housing 120 that defines an upper connection portion 122 and a lower connection portion 124 to which the laser module 100 can be attached to the housing 12 of the jigsaw 10. With reference to FIG. 2, the upper connection portion 122 can include one or more fasteners 126 that can be accepted in an aperture 128 formed in the housing 12 of the jigsaw 10. The one or more fasteners 126 can be inserted into the aperture 128 to draw and hold the laser module 100 toward the housing 12 of the jigsaw 10. In one example, the one or more fasteners 126 can be hand-adjustable so as to be secured or uncoupled by hand from the housing 12.

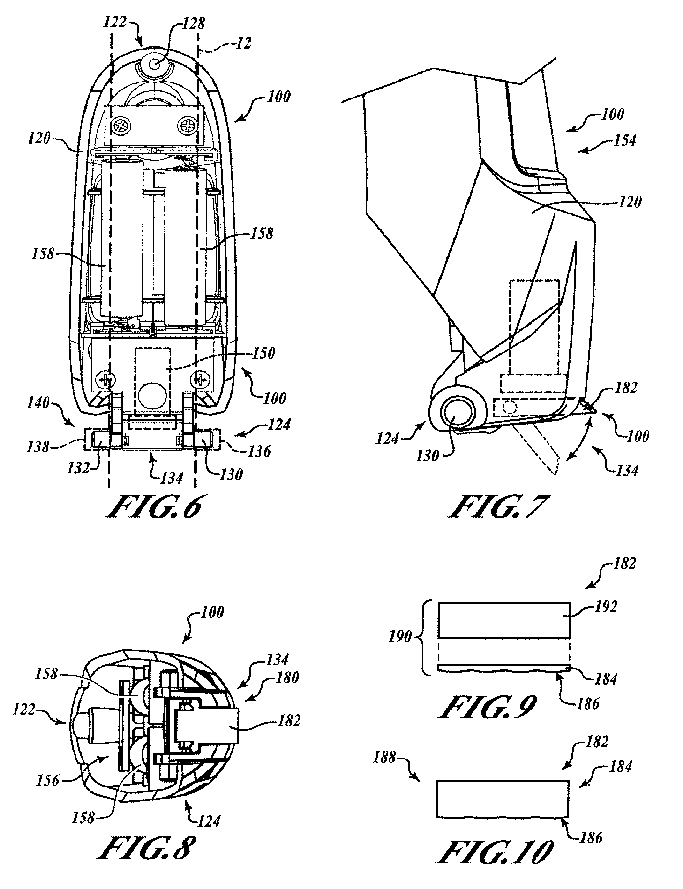

With the reference to FIG. 6, the lower connection portion 124 of the housing 120 of the laser module 100 can include a first post 130 and a second post 132 formed in a bottom portion 134 of the housing 120. The posts 130, 132 can be accepted by an aperture 136 and an aperture 138, respectively, formed in the housing 12 of the jigsaw 10. In one example, a connection 140 between the posts 130, 132 and the apertures 136, 138 can be configured so that the housing 120 of the laser module 100 can pivot relative to the housing 12 of the jigsaw 10 when the one or more fasteners 126 is removed from the aperture 128, as shown in FIG. 2. By way of the above example, the posts 130, 132 can each have substantially cylindrical outer surfaces to permit the posts 130, 132 to rotate within the apertures 136, 138. It will be appreciated in light of the disclosure that the posts 130, 132 can be implemented on the housing 12 of the jigsaw 10 and the respective apertures 136, 138 can be implemented on the housing of the laser module or various suitable combinations thereof.

With reference to FIG. 6, a laser generator 150 can be contained within the housing 120 of the laser module 100. With reference to FIG. 1, a power switch 152 that can turn the laser generator on and off can be utilized by a user and therefore can be accessible from a front 154 of the housing 120. With reference to FIG. 2, a rear area 156 of the housing 120 can be open to provide the user access to one or more batteries 158 that can be used to provide power to the laser module 100. By uncoupling the fastener 126 of the upper connection portion 122, the laser module 100 can be tilted forward so as to provide, among other things, access to the one or more batteries 158 in the rear area 156 of the laser module 100. It will be appreciated in light of the disclosure that while the batteries 158 are illustrated in FIG. 2, one or more batteries 158 and/or one or more other suitable power sources can be used to provide power to the laser module 100.

With reference to FIG. 7, an optical assembly 180 can be moved between an engaged condition and a disengaged condition (shown in phantom line). In the engaged condition and with reference to FIG. 1, the laser light 102 travels through one or more optical members 182 to produce the laser light pattern 104. In the disengaged position, the laser module 100 can be configured to produce a solid laser line (i.e., no dots, dashes, etc.) along the cutting path 114 of the jigsaw 10. In one example, the solid laser line can be less intense than a typical solid laser line cutting guide. In a further example, swinging the one or more optical members 182 to the disengaged condition can produce the conventional solid and bright continuous laser cutting guide.

A portion of the one or more optical members 182 can be accessible from the front 154 of the housing 120 of the laser module 100. The user can grasp the portion of the one or more optical members 182 to move the one or more optical members 182 between the engaged condition and the disengaged condition. By being able to grasp the portion of the one or more optical members 182, the one or more optical members 182 can be moved between the engaged condition and the disengaged condition with by hand, i.e., a hand operation, and does not require any tools and/or disassembly of the laser module 100.

With reference to FIG. 4, the laser module 100 can produce the sequence of dots 108 to illuminate the cutting path 114, when the optical assembly is in the engaged condition. In a further example and with reference to FIG. 5, the laser module 100 can produce the sequence of dashes 106 to illuminate the cutting path 114, when the optical assembly 180 is in the engaged condition. It will be appreciated in light of the disclosure that the optical assembly 180 can also be configured to selectively produce one or more combinations of characters, icons and/or one or more suitable contrasting patterns that can provide a cutting guide established by the laser light pattern 104 that can be shown to highlight but not obscure the cutting path 114.

A filter 184 can be included with the one or more optical members 182 of the laser module 100. The filter 184 can be configured to be readily replaced so as to change the laser light pattern 104 established by the laser module 100. In one example, the filter 184 can have a textured surface 186. In lieu of or in addition to the textured surface 186, opaque portions can be used to interrupt the laser light 102. In this regard, the filter 184 can be used to produce the sequence of dashes 106, the sequence of dots 108 graphics, icons, etc. In one example, the filter 184 can be selectively swapped out or replaced by the user to affect a user selected change in the laser light pattern 104. In this regard, predetermined laser light patterns can be incorporated into one or more of the optical members 182 and/or the one or more filters 184.

The filter 184 can be a single optical element in the laser module 100, e.g., a monolithic component 188, as shown in FIG. 10. In this example, the filter 184, as part of the monolithic component 188, can direct and manipulate the laser light 102 in one or more ways, e.g., spread the laser light 102 and interrupt the laser light to produce the laser light pattern 104. The filter 184 can also be included with other optical members 182 that can each individually direct and manipulate the laser light 102. For example, optical members 190 can include the filter 184 connected to a substrate 192. Optical properties of the substrate 192 can cause the laser light 102 to change from a point source to a suitable line of light that can then be directed through the filter 184. The filter 184 can then partially obstruct the laser light 102 to produce the laser light pattern 104 that establishes the laser cutting guide.

In one example, the one or more optical members 182 can be moved to the disengaged condition to change the laser light pattern 104 to the continuous bright beam of laser light. In this regard, the user can flip down the optical member 182 from the housing 120 of the laser module to remove the laser light pattern 104. In further aspects, one or more optical members 182 can be configured so that when the optical assembly 180 is changed between the engaged condition and the disengaged condition, a first laser light pattern and a second laser light pattern, respectively, can be produced. By way of the above example, the first pattern can be the sequence of dots 108 (FIG. 4) and the second pattern can be the sequence of dashes 106 (FIG. 5). In this instance, one or more optical members can remain in a position to affect the laser light 102, while the optical members 182 are only introduced into the laser light 102 when the optical assembly 180 is in the engaged condition.

With reference to FIG. 1, the jigsaw 10 can also include the keel assembly 200 that can provide additional straight-line accuracy when cutting a straight line in the workpiece 56 (e.g., can help avoid wandering of the jigsaw cutting line). As shown in FIG. 3, the keel assembly 200 can be pivoted with the housing 12 when the shoe member 50 is moved to one or more cutting angles 28 relative to the housing 12. In this regard, the shoe member 50 can be pivoted relative to the housing 12 but the keel assembly 200 can remain generally in line with the housing 12 so as to provide, for example, a straight bevel cut through the workpiece 56, i.e., the cutting angle is not perpendicular to the workpiece 36 but the cut through the workpiece 36 is straight.

With reference to FIG. 1, the keel assembly 200 can extend from the housing 12 beyond the shoe member 50 and distally outward (i.e., downward) from the bottom 52 of the jigsaw 10. The keel assembly 200 can include a keel blade member 202 to which a lower guide assembly 204 can be attached. The lower guide assembly 204 can be spaced at various predetermined distances from an upper guide assembly 206 that extends from the housing 12. By adjusting the lower guide assembly 204 relative to the upper guide assembly 206, the distance between the assemblies 204, 206 can be adjusted to accommodate workpieces having different thicknesses.

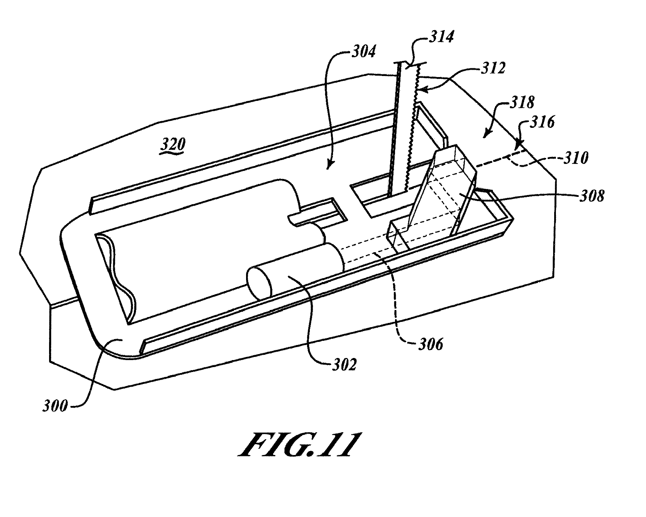

With reference to FIG. 11, a shoe member 300 can have a laser module 302 coupled to a top surface 304 of the shoe member 300. The laser module 302 can project laser light 306 into an optical member 308 that can, among other things, change the direction of the laser light 306. A cutting path 310 can extend from a forward side 312 (i.e., the cutting side) of the cutting blade 314. The laser light 306 can be directed and manipulated by the optical member 308 to produce a laser light pattern 316 in front of the cutting blade 314 to establish the laser cutting guide. The optical member 308 and/or the laser module 302 can be configured to produce one or more laser light patterns 316 such as the sequence of dashes, sequence of dots, etc. discussed above. It can be shown that the laser module 302 on the shoe member 300 can provide a laser cutting guide 318 on a workpiece 320 without having to disassemble a housing of the jigsaw (or other cutting tool) such as in a retrofit application. It will be appreciated in light of the disclosure that one or more of the optical members 182 and/or the filters 184 can be implemented (integrally or as separate components) with the optical member 308 on the shoe member 300.

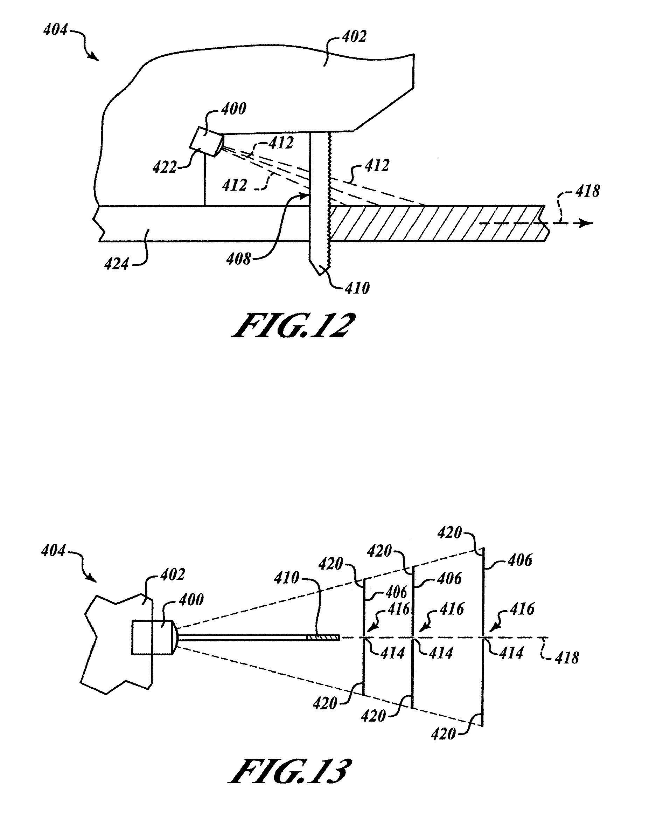

With reference to FIGS. 12 and 13, a laser module 400 that can be connected to a housing 402 of a jigsaw 404 can project one or more generally horizontal lines 406 (FIG. 13) across a rear edge 408 of a cutting blade 410. Specifically, laser light 412 is projected beyond a front side 414, i.e., a cutting side, of the cutting blade 410, resulting in a portion of the laser light 412 being obstructed by the cutting blade 410. The obstruction of the laser light 412 produces an interruption in each of the generally horizontal lines 406, e.g., a shadow 416 that is in-line with a cutting path 418 of the cutting blade 410. Portions 420 of the generally horizontal lines 406 are adjacent to but do not cross the cutting path 418 and can be shown to highlight but not obstruct the cutting path 418. The one or more shadows 416, by virtue of contrast with the portions 420 of the generally horizontal lines 406, can be shown to highlight the cutting path 418. In this arrangement, no laser light 412 is directed onto the cutting path but only adjacent to it.

In addition, when there is twist on the cutting blade 410, the cutting path 418 can still be sufficiently highlighted by the combination of the respective shadows 416 and the laser light 412. To further highlight the cutting path 418 a wide angle light 422, e.g., an incandescent bulb, an LED, etc., can be turned on along with (or in lieu of) the lines 406 of the laser light 412. By doing so, the contrast of the shadows 416 relative to the portions 420 of the generally horizontal lines 406 can be improved as the light 420 can cast a more defined shadow along the cutting path 418 from the cutting blade 410.

While specific aspects have been described in the specification and illustrated in the drawings, it will be understood by those skilled in the art that various changes can be made and equivalents can be substituted for elements and components thereof without departing from the scope of the present teachings, as defined in the claims. Furthermore, the mixing and matching of features, elements, components and/or functions between various aspects of the present teachings are expressly contemplated herein so that one skilled in the art will appreciate from the present teachings that features, elements, components and/or functions of one aspect of the present teachings can be incorporated into another aspect, as appropriate, unless described otherwise above. Moreover, many modifications may be made to adapt a particular situation, configuration or material to the present teachings without departing from the essential scope thereof.

## Claims

1. A jigsaw comprising:
a housing that contains a motor activated by a trigger assembly;
a reciprocating shaft connected to said motor that extends from said housing toward a cutting area;
a laser module contained with a housing operable to produce a laser light pattern forward of said cutting area;
an upper connection portion that releasably connects said housing of said laser module to said housing of the jigsaw; and
a lower connection portion that pivotally couples said housing of said laser module to said housing of the jigsaw to permit said housing of said laser module to tilt away from said housing of the jigsaw to provide access to a rear area of said laser module.

2. The jigsaw of Claim 1, further comprising a shoe member pivotally coupled to said housing and an airflow pathway through said shoe member.

3. The jigsaw of Claim 1 or Claim 2, further comprising an optical assembly connected to said housing of the laser module having an engaged condition that establishes said laser light pattern and a disengaged condition that alters or removes said laser pattern.

4. The jigsaw of any preceding claim, wherein said laser module, when tilted away from said housing of the jigsaw, provides access to a rear area of said laser module in which one or more batteries are replaced.

5. The jigsaw of any preceding claim, further comprising an optical member pivotally coupled to said housing of said laser module, wherein said optical member is movable between an engaged condition in which at least a portion of laser light that produces said laser light pattern travels through said optical member and a disengaged condition in which said laser light does not travel through said optical member.

6. The jigsaw of any preceding claim, wherein said laser light pattern is selected from at least one of a sequence of dots, a sequence of dashes and one or more combinations thereof.

7. The jigsaw of any preceding claim, further comprising a window in said housing of the jigsaw through which a portion of an angle indicator wheel is visible, and descriptive of an angle between said housing of the jigsaw and a shoe member pivotally connected thereto.

8. The jigsaw of any preceding claim, wherein said laser module produces said laser light pattern when said housing of the jigsaw and said shoe member establish an acute angle.

9. The jigsaw of any preceding claim, wherein said laser module projects a laser light pattern that contacts a back side of a cutting blade of the jigsaw and establishes three generally parallel laser lines on the workpiece that are generally perpendicular to a cutting direction through a workpiece and includes an interruption in each of said three generally parallel laser lines on the workpiece that are generally aligned with said cutting direction.

10. The jigsaw of Claim 9, further comprising a light source that casts light onto said back side of the cutting blade to produce a shadow disposed in said interruption established in said laser line generally aligned with said cutting direction.

11. A method comprising:
grasping an optical member accessible on a housing of a laser module connected to a housing of a cutting tool;
moving said optical member between an engaged condition and a disengaged condition to alter a laser light pattern produced from said laser module;
unfastening an upper connection portion of said housing of said laser module from said housing of said cutting tool; and
tilting said housing of said laser module away from said housing of said cutting tool about a lower connection portion between said housing of said laser module and said housing of said cutting tool to provide access to a rear area of said laser module.

12. The method of Claim 11, wherein said laser light pattern is selected from at least one of a sequence of dots, a sequence of dashes and one or more combinations thereof.
